# FASCICULE DE BREVET EUROPEEN

(11) **EP 1 690 449 B1**
(45) Date de publication et mention de la délivrance du brevet: **25.04.2018**
(21) Numéro de dépôt: 06356013.0
(22) Date de dépôt: 10.02.2006
(51) Int. Cl.: A01G 31/00, A01G 27/02, A01G 9/10

(54) **Dispositif de culture hors sol pour suspensions aeriennes**
Vorrichtung zur erdlosen Kultivierung für Hängekulturen
Soilless culture device for suspended cultures

(30) Priorité: 11.02.2005 FR 0501545
(43) Date de publication de la demande: 16.08.2006
(73) Titulaire: Guillemain, Jean-Sylvain, 18120 Lury sur Arnon (FR); Guillemain, Francoise, 18120 Lury sur Arnon (FR)
(72) Inventeur: Guillemain, Jean-Sylvain, 18120 Lury sur Arnon (FR); Guillemain, Francoise, 18120 Lury sur Arnon (FR)
(74) Mandataire: Cabinet Poncet

(56) Documents cités:
- WO-A-01/62072
- FR-A- 2 791 865
- US-A- 4 299 056

## Description

La présente invention concerne les dispositifs de culture hors sol destinés à garnir des suspensions aériennes telles que les jardinières, en offrant un milieu de croissance adapté et pour des plantes développées.

Le fleurissement aérien offre actuellement des possibilités décoratives intéressantes, que les villes tendent à développer.

En effet, ce fleurissement en hauteur présente l'avantage d'être hors de portée des piétons, et ainsi protégé des dégradations volontaires.

Divers types de supports de fleurissement ont déjà été proposés, tels que des jardinières suspendues, des structures florales, des demi-coquilles suspendues sur un mât, des balconnières en polyéthylène rotomoulées à double paroi, des potences fleuries. Ces structures de fleurissement en hauteur présentent des contraintes de gestion importantes. En effet, il faut jusqu'à présent procéder à une dépose saisonnière de toute la structure en suspension. Cela nécessite une main-d'oeuvre et un matériel appropriés importants, comprenant une nacelle pour élever le personnel à la hauteur de la suspension, pour permettre le démontage de la suspension par rapport à la structure portante telle que le mât, le déboulonnage et le boulonnage, avec la nécessité de porter des structures lourdes. On doit ensuite mettre la structure suspendue en culture, sous serre, et la remettre en position sur sa structure support. Ces opérations sont difficiles, à cause du volume et du poids des jardinières.

On connaît déjà des substrats de culture conditionnés sous forme de poches prêtes à fleurir (US 6,016,628), de gaines (EP 0 512 272) de dimensions adaptées aux jardinières de balcon, de manchons précultivés (FR 2 680 948). Le document EP 0 810 819 a proposé un substrat pour plantes sous forme d'un coussin dont l'enveloppe est faite d'un film de matière plastique, la forme du coussin étant adaptée ou adaptable à la section droite intérieure d'un bac à fleurs rectangulaire. L'enveloppe du coussin laisse passer l'eau de l'extérieur vers l'intérieur, et la retient pour empêcher son passage de l'intérieur vers l'extérieur.

Ces structures connues ne sont pas suffisamment adaptées à la culture en suspensions aériennes, car la manutention des conditionnements n'est pas aisée, et la réserve possible en eau n'est pas satisfaisante. En outre, la structure même des conditionnements ne permet pas une adaptation aisée à toutes formes de structure portante de fleurissement en hauteur. En effet, la forme des conditionnements connus est essentiellement parallélépipédique, et ne pourrait notamment pas s'adapter à une jardinière ronde ou en demi-coquille.

On connaît aussi du document US 4,299,056 un sac parallélépipédique contenant un substrat de culture et muni de deux prolongements latéraux. La paroi inférieure et les prolongements latéraux sont en un matériau hydrophile, favorisant l'hydratation du substrat par capillarité. Les racines restent contenues dans le sac. Une telle structure ne facilite pas encore suffisamment la manutention dans le cas de sacs contenant des plantes précultivées.

Le document WO 01/62072 décrit un dispositif de culture hors sol comprenant un sac fabriqué à partir d'une feuille ou d'une bande continue en PVC. Il est ainsi constitué une barrière poreuse permettant de limiter la croissance du système racinaire des plantes en confinant leurs racines dans le sac. La barrière poreuse ne laisse passer que des racines de diamètre trop faible pour participer au captage d'eau, assurer un ancrage efficace des plantes dans le dispositif et assurer une solidarisation de l'ensemble pour une préhension sans risque de dégradation.

Le problème proposé par la présente invention est de concevoir une nouvelle structure de dispositif de culture hors sol pour bac de suspension aérienne, qui à la fois permette une adaptation aisée à toutes formes habituelles des jardinières ou autres structures suspendues, qui permette une humidification efficace des racines des plantes contenues dans le dispositif, et qui en outre facilite la manutention et la préhension des éléments amovibles du dispositif de culture hors sol. Cela doit permettre notamment le travail de mise en culture et de suivi en serre sans démontage complet de la structure porteuse suspendue, puis le travail de transport et de placement du dispositif dans une structure porteuse suspendue laissée en place. De la sorte, il devient possible d'adapter le fleurissement plusieurs fois par an, en réduisant et en facilitant les opérations de portage.

De préférence, l'invention cherche en outre, pour assurer une bonne humidification des racines, à éviter la dégradation du dispositif en cas de manque d'eau momentané dans la réserve en eau.

Un autre but possible de l'invention est également de faciliter le transport des éléments préfleuris, en assurant leur stabilité, tout en protégeant les racines des éléments floraux lors de ce transport.

En complément, l'invention peut prévoir des moyens pour assurer une bonne retenue d'un paillage ou d'une couche du décor déposée à la base de la structure florale lors de l'utilisation.

Pour atteindre ces buts ainsi que d'autres, l'invention propose un dispositif pour la culture hors sol de plantes dans un bac de suspension aérienne, comprenant un sac contenant un substrat de culture, le sac comportant une paroi supérieure et une paroi inférieure solidarisées l'une à l'autre selon un pourtour de sac et adaptées pour retenir le substrat de culture lors des manipulations et du transport ; selon l'invention :
- la paroi inférieure se prolonge au-delà du pourtour de sac selon une structure périphérique de taille suffisante pour plonger dans le fond du bac de suspension aérienne,
- la paroi inférieure est en un matériau hydrophile, apte à remplir le rôle de nappe d'hydratation,
- la paroi inférieure est structurée de façon à être perméable aux racines des plantes que l'on veut cultiver dans le dispositif.

Par cette combinaison de caractéristiques, il est aisé de positionner un sac contenant un substrat de culture dans un bac de suspension aérienne laissé en place, puis d'engager progressivement la structure périphérique en matériau hydrophile pour la positionner le long de la paroi intérieure du bac de suspension aérienne jusque dans la zone inférieure où se trouvent la réserve d'eau ou les mèches de rétention qui sont elles-mêmes en communication avec l'eau de la réserve. Il est en outre aisé de manipuler et de transporter un tel sac contenant le substrat de culture et contenant déjà des plantes précultivées dont les racines ont traversé la paroi inférieure perméable aux racines. En effet, le plateau racinaire qui s'est développé sous la paroi inférieure du sac assure un ancrage efficace des plantes dans le dispositif, et assure une solidarisation de l'ensemble en s'opposant aux déformations éventuelles du sac et au déplacement interne du substrat de culture, autorisant, sans risque de dégradation, la préhension d'un dispositif par la structure périphérique selon l'un de ses côtés, le dispositif étant alors orienté verticalement. De la sorte, on peut retirer un sac d'une suspension aérienne, puis manipuler aisément et repositionner un autre sac précultivé, sans démontage complet de la structure de suspension aérienne, ce qui facilite considérablement les opérations de fleurissement et de changements de fleurs.

Un tel dispositif de culture hors sol peut être avantageusement aussi utilisé pour la garniture de murs verticaux de végétaux présentant des contenants en suspensions aériennes de formes et dimensions diverses.

Selon un mode de réalisation de l'invention, la structure périphérique est une large bavette continue. Si le matériau formant la bavette continue est suffisamment souple, cela peut convenir. Le dispositif comprenant une structure périphérique en forme de large bavette échancrée, définissant une pluralité de prolongements périphériques répartis depuis le pourtour de sac. Cette structure peut plus facilement être pliée ou roulée, pour lui donner les positions nécessaires pour plusieurs utilisations, c'est-à-dire une position déployée vers le bas comme nappe d'hydratation, une position roulée sur les côtés comme moyen de stabilisation, une position rabattue au-dessous du sac comme moyen de protection de racines.

La structure périphérique peut avantageusement être associée à des moyens de lestage de sa zone d'extrémité libre, favorisant son maintien en extension verticale. De la sorte, on évite la rétraction de la structure périphérique, dans l'hypothèse d'un manque d'eau en réserve du bac de suspension aérienne, et le dispositif reste en état de fonctionner dès que de l'eau réapparaît dans la réserve, ce qui assure à nouveau une alimentation correcte des plantes. A défaut, l'alimentation des plantes en eau serait interrompue ou gravement perturbée, sans que les utilisateurs en soient informés à temps.

Selon un mode de réalisation préféré, la structure périphérique est en un matériau présentant une résistance mécanique suffisante pour constituer un organe de préhension pour le portage du sac et de son contenu.

Selon un mode de réalisation perfectionné, la structure périphérique comprend des zones renforcées de préhension, facilitant la préhension et participant au lestage. Par exemple, les zones renforcées peuvent être des ourlets, avec inclusions éventuelles d'éléments pesants.

Le matériau constituant la structure périphérique, et la forme générale de la structure périphérique, sont choisis de façon que la structure périphérique soit adaptée pour être sélectivement déployée vers le bas afin de plonger dans un compartiment de rétention d'eau du bac de suspension aérienne, pour être sélectivement roulée en périphérie du sac afin de constituer un moyen de stabilisation et de calage périphérique, et pour être sélectivement rabattue sous la face inférieure du sac afin de constituer un moyen de protection inférieure lors du transport. On peut ainsi notamment protéger les racines dont les extrémités dépassent sous la face inférieure du sac.

Selon une première possibilité, les parois supérieure et inférieure sont directement solidarisées l'une à l'autre selon le pourtour de sac par couture, collage, agrafage ou soudure. Une telle structure rend les sacs facilement adaptables à la forme des bacs de suspension aérienne auxquels ils sont destinés.

En alternative, les parois supérieure et inférieure sont solidarisées l'une à l'autre par l'intermédiaire d'une paroi périphérique de liaison, de hauteur adaptée à la dimension du bac de suspension aérienne, et à laquelle elles sont fixées par couture, collage, agrafage ou soudure. On peut alors adapter l'invention à des utilisations dans des bacs de suspension aérienne de grande profondeur.

Selon un autre aspect de l'invention, le dispositif contient des plantes dont les racines traversent la paroi inférieure perméable aux racines et forment, sous la paroi inférieure, un plateau racinaire qui ancre les racines et les plantes au dispositif.

Dans un dispositif de culture hors sol selon l'invention, le sac défini ci-dessus peut être associé à un bac de suspension aérienne à double paroi, dont le double fond constitue une réserve d'eau communiquant par des mèches de rétention avec la base du compartiment intérieur du bac.

Dans le bac de suspension aérienne, on peut avantageusement placer un lit de matériau de drainage et d'amendement, sur lequel repose le sac à substrat de culture, la structure périphérique étant engagée autour et sous le lit de matériau de drainage et d'amendement pour venir en contact des mèches de rétention. On évite ainsi la manutention de sacs trop lourds, le lit de matériau de drainage et d'amendement pouvant rester à demeure dans le bac de suspension aérienne lors de l'enlèvement du sac à substrat de culture.

De préférence, le lit de matériau de drainage et d'amendement est formé de la juxtaposition d'une pluralité de sachets individuels dudit matériau, l'enveloppe des sachets étant en un matériau perméable à l'air et laissant le passage des racines. Cela facilite sensiblement le passage de la structure périphérique pour la mise en position d'un sac ou son retrait, car on peut aisément déplacer les sachets individuels à l'écart de la paroi intérieure du bac de suspension aérienne.

D'autres objets, caractéristiques et avantages de la présente invention ressortiront de la description suivante de modes de réalisation particuliers, faite en relation avec les figures jointes, parmi lesquelles :
- la figure 1 est une vue de côté en coupe d'un sac à substrat de culture avec plantes, selon un mode de réalisation de l'invention, en position dans laquelle la structure périphérique est roulée pour constituer un moyen de stabilisation ;
- la figure 2 est une vue de côté du sac à substrat de culture de la figure 1, avec la structure périphérique en position déployée vers le bas ;
- la figure 3 est une vue de côté en coupe d'un sac à substrat de culture avec la structure périphérique roulée en position de stabilisation, selon un second mode de réalisation de l'invention ;
- la figure 4 est une vue de dessus du sac à substrat de culture de la figure 3 ou de la figure 1 ;
- la figure 5 est une vue de côté en coupe d'un dispositif de culture hors sol incorporant un sac à substrat de culture de la figure 1 dans un bac de suspension aérienne ;
- la figure 6 est une vue de côté en coupe d'un sac à substrat de culture selon un autre mode de réalisation de l'invention ;
- la figure 7 est une vue de côté en coupe du sac à substrat de culture de la figure 6 avec la structure périphérique repliée en face inférieure pour réaliser une protection ou un conditionnement de transport ;
- la figure 8 est une vue de côté en coupe du dispositif de culture contenant des plantes précultivées dont les racines forment un plateau racinaire, avec la structure périphérique déployée en position de protection des racines pour le transport ; et
- la figure 9 est une vue de côté illustrant la possibilité de manutention du dispositif précultivé, tenu suspendu en orientation verticale.

Dans tous les modes de réalisation illustrés sur les figures, un dispositif de culture hors sol selon l'invention comprend au moins un sac 1, contenant un substrat de culture 2, et limité par une paroi supérieure 3 et une paroi inférieure 4 solidarisées l'une à l'autre selon un pourtour de sac 5.

Les parois supérieure 3 et inférieure 4 présentent une résistance mécanique suffisante pour retenir le substrat de culture 2 lors des manipulations et des transports du sac 1.

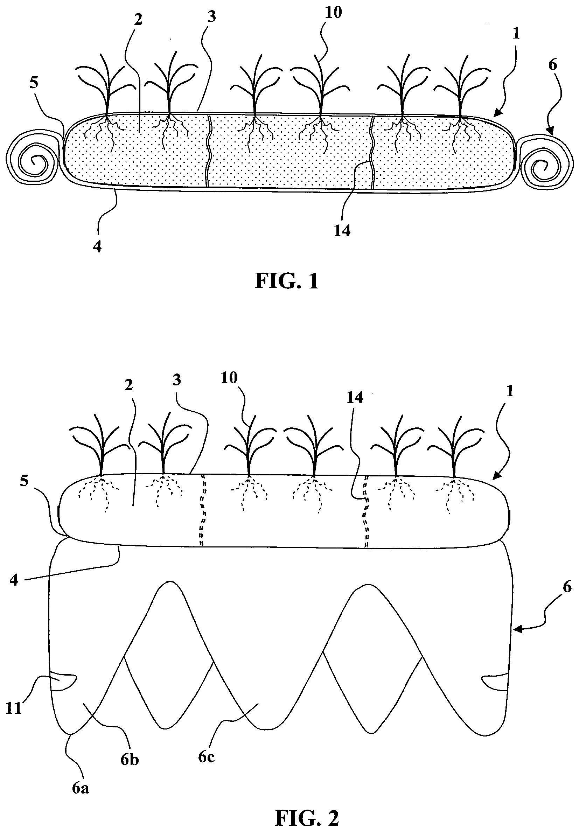

Dans un premier mode de réalisation illustré sur les figures 1 et 2, les parois supérieure 3 et inférieure 4 sont directement solidarisées l'une à l'autre selon le pourtour de sac 5 par tout moyen de solidarisation approprié pour donner au sac une forme de contour désirée pour adaptation dans un bac de suspension aérienne de forme similaire. Notamment, la solidarisation pourra être effectuée par couture, collage, agrafage, soudure, le mode de solidarisation étant choisi en fonction des matériaux constituant les parois supérieure 3 et inférieure 4.

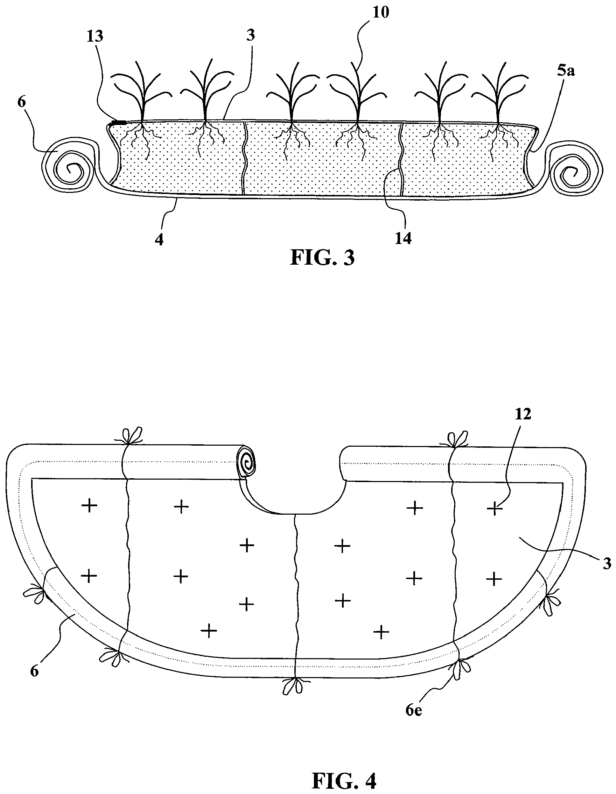

Dans un second mode de réalisation illustré sur la figure 3, les parois supérieure 3 et inférieure 4 sont solidarisées l'une à l'autre par l'intermédiaire d'une paroi périphérique de liaison 5a, de hauteur adaptée à la dimension du bac de suspension aérienne que l'on veut emplir, et à laquelle elles sont fixées par des moyens similaires de solidarisation tels que couture, collage, agrafage ou soudure, en fonction des matériaux utilisés pour réaliser les parois supérieure 3, inférieure 4 et périphérique 5a.

Par une telle structure à parois supérieure 3 et inférieure 4 solidarisées selon le pourtour de sac 5, il est aisé de réaliser un sac 1 à substrat de culture 2 ayant une forme particulière, par exemple en prévoyant un patron reproduisant le contour du bac de suspension aérienne qu'il faut remplir.

Dans tous les modes de réalisation selon l'invention, la paroi inférieure 4 se prolonge au-delà du pourtour de sac 5 selon une structure périphérique 6, en forme générale de jupe périphérique comme illustré sur la figure 2, limitée par un bord inférieur 6a. La dimension ou hauteur de la jupe périphérique ou structure périphérique 6 doit être suffisante pour que son bord inférieur 6a plonge dans le fond d'un bac de suspension aérienne que l'on doit remplir.

La paroi inférieure 4, tout comme la structure périphérique 6, est en un matériau hydrophile, apte à remplir le rôle de nappe d'hydratation. Simultanément, selon l'invention, la paroi inférieure 4 présente une structure suffisamment aérée pour être perméable aux racines des plantes que le sac 1 est destiné à porter.

On pourra par exemple utiliser un feutre, une feutrine minérale, une nappe d'irrigation, un feutre horticole hydrophile et imputrescible, tels qu'on les trouve habituellement dans le commerce pour un usage comme nappe d'hydratation. On pourra aussi utiliser une toile aiguilletée de fibres naturelles suffisamment résistantes, une toile polypropylène aiguilletée de fibres naturelles telles que chanvre, lin, laine, ou, de préférence, un matériau en grande partie recyclable ou biodégradable utilisé en horticulture.

De bons résultats pourront être obtenus en utilisant des produits tels qu'un feutre horticole hydrophile distribué sous l'appellation "aquanappe" par la société CityPlantes, par exemple selon une épaisseur de 2 à 5 mm, ou une nappe intissée de marque "bionet" distribuée par la société Noriver, par exemple selon une épaisseur de 4 à 8 mm. Des grammages de 50 à 300 g/m² pourront convenir.

Selon une première possibilité, la structure périphérique 6 peut être une large bavette continue, de hauteur constante. Toutefois, ce mode de réalisation n'est pas très bien adapté à une position roulée telle qu'illustrée sur les figures 1 ou 3.

Ainsi, on préférera une structure périphérique 6 sous forme d'une large bavette échancrée, par exemple telle qu'illustrée sur la figure 2, dans laquelle le bord inférieur 6a est ondulé ou crénelé, selon la profondeur désirée, pour définir une pluralité de prolongements périphériques tels que les prolongements 6b et 6c, répartis de façon régulière depuis le pourtour de sac 5.

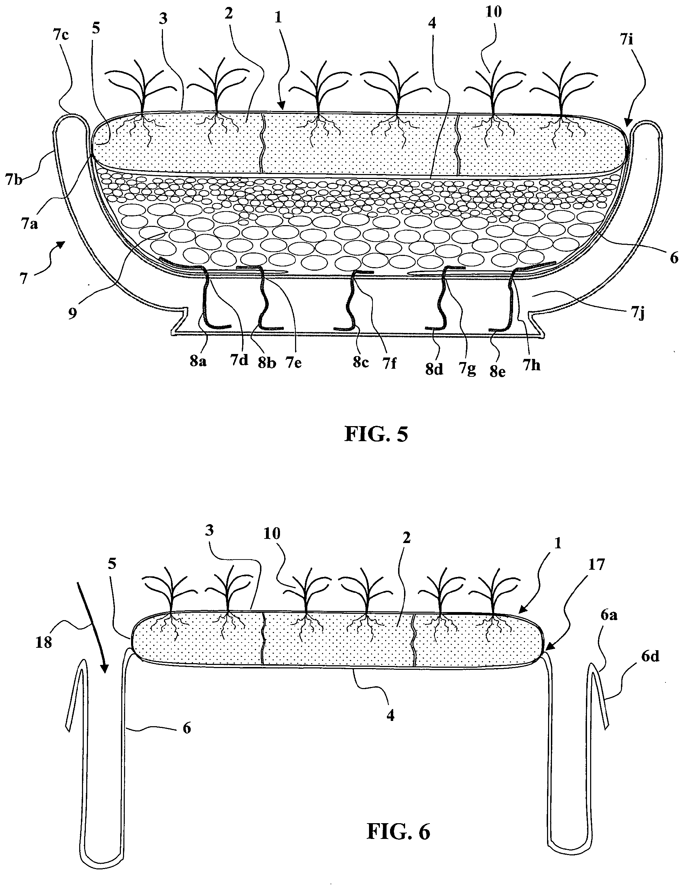

On considère maintenant la figure 5, qui illustre un dispositif de culture hors sol selon un mode de réalisation de l'invention, dans lequel on retrouve le sac 1 contenant le substrat de culture 2, associé à un bac de suspension aérienne 7.

Le bac de suspension aérienne 7 est en forme de réceptacle ouvert vers le haut, limité en périphérie et à la base par une double paroi constituée d'une paroi intérieure 7a et d'une paroi extérieure 7b se rejoignant selon le bord supérieur périphérique 7c, la paroi extérieure 7b étant étanche, la paroi intérieure 7a étant pourvue, dans son fond, d'orifices 7d, 7e, 7f, 7g et 7h par lesquels peuvent passer des mèches de rétention 8a, 8b, 8c, 8d et 8e entre un compartiment supérieur 7i et une chambre inférieure 7j constituant une réserve d'eau.

Dans le fond du compartiment supérieur 7i du bac de suspension aérienne 7, on a placé, selon ce mode de réalisation, un lit de matériau de drainage et d'amendement 9, sur lequel repose le sac 1 à substrat de culture 2 par sa paroi inférieure 4.

La paroi inférieure 4 autorise la pénétration des racines dans le lit de matériau de drainage et d'amendement 9.

Comme on le voit sur la figure 5, la structure périphérique 6 est engagée autour et sous le lit de matériau de drainage et d'amendement 9, le long de la paroi intérieure 7a, pour venir, dans le fond du compartiment supérieur 7i, en contact des mèches de rétention 8a-8e. Ainsi, les mèches de rétention 8a-8e prélèvent par capillarité de l'eau contenue dans la réserve 7j, et la transmettent à la structure périphérique 6 qui elle-même la transmet à la paroi inférieure 4 de sac 1 pour humidifier les racines de plantes 10 qui sont plantées dans le substrat 2 du sac 1. Simultanément, la structure périphérique 6 maintient en place le sac 1 et évite ainsi tout arrachement par l'effet de vents violents sur des plants 10 très développés.

Le lit de matériau de drainage et d'amendement 9 peut être constitué par exemple d'un mélange de substrat avec gravillons et sable, laine de roche, fibres de coco, produits issus de roche volcanique expansée tels que perlite, pouzzolane, zéolithe, et de façon générale, tout autre matériau utilisé en culture hydroponique.

Le lit de matériau de drainage et d'amendement 9 peut avantageusement être formé de la juxtaposition d'une pluralité de sachets individuels dudit matériau de drainage et d'amendement, l'enveloppe des sachets étant en un matériau perméable à l'air et laissant le passage des racines. De la sorte, il est plus facile d'engager à la main la structure périphérique 6 entre la paroi intérieure 7b et le lit de matériau de drainage et d'amendement 9, jusqu'au fond du compartiment supérieur 7i, en déplaçant partiellement les sachets individuels de matériau de drainage et d'amendement.

Pour les sachets de matériau de drainage et d'amendement, on pourra utiliser par exemple comme matériau le dispositif décrit dans la demande de brevet FR 2 691 875.

En alternative, on pourra utiliser des petits sachets pouvant présenter une mèche qui assure une meilleure tenue en eau du lit ainsi constitué. Un engrais peut être ajouté au matériau de drainage et d'amendement.

Selon une autre variante, les sachets peuvent être indépendamment différenciés, les uns contenant des matériaux de granulométrie plus importante que les autres. On les dispose alors de manière à constituer le meilleur lit, généralement en disposant du bas vers le haut la granulométrie la plus importante vers la moins importante.

Dans le mode de réalisation de la figure 5, le lit de matériau de drainage et d'amendement 9 reste en permanence en appui sur la zone d'extrémité de la structure périphérique 6, et provoque son maintien en extension depuis le pourtour de sac 5 jusque dans la zone inférieure occupée par les mèches de rétention 8a-8e.

Toutefois, dans certaines applications, la structure périphérique 6 peut être librement engagée dans un compartiment de réserve d'eau, sans être retenue par un lit de matériau de drainage et d'amendement. Dans ce cas, il peut être avantageux de prévoir des moyens de lestage, pour lester la zone d'extrémité libre ou bord inférieur 6a de la structure périphérique 6. De la sorte, les moyens de lestage gardent en tension la structure périphérique 6 même en l'absence d'eau, pour éviter sa rétraction.

Pour réaliser le lestage, on peut par exemple prévoir un bord inférieur 6a ourlé, dont l'ourlet contient par exemple un matériau pesant, évitant que la structure périphérique 6 ne se rétracte dans un milieu devenu insuffisamment hydraté.

Le lestage de la structure périphérique 6 peut se faire aussi par ajout d'un élément rapporté, par exemple par grippage d'une pince à nappe de table d'extérieur, ou par toute autre structure rapportée suffisamment lourde et dont l'encombrement est acceptable.

En alternative ou en complément, la structure périphérique 6 peut avantageusement comprendre des zones renforcées de préhension telles que la zone 11 (figure 2), pour faciliter la préhension et participer simultanément au lestage.

Dans une version simplifiée, la paroi supérieure 3 peut être seulement constituée d'un matériau tissé ou non tissé, offrant les caractéristiques premières d'être perméable à l'eau et à l'air, tout en assurant une retenue du substrat 2 lors du transport et des manutentions.

Dans une version plus perfectionnée, la paroi supérieure 3 peut reprendre la structure décrite dans le document EP 0 841 848. La paroi supérieure 3 est alors formée d'au moins deux matériaux associés comprenant un premier matériau conformé en grosses mailles, susceptible d'assurer une bonne tenue d'une éventuelle couche de paillage ultérieurement déposée sur le sac 1, et un second matériau rapidement biodégradable sous l'action de l'eau et obturant temporairement les trous desdites mailles du premier matériau pour retenir temporairement le substrat de culture 2 lors des manipulations et du transport du sac 1. Le premier matériau et le second matériau peuvent se positionner indifféremment en parois interne ou externe, ou peuvent être collés l'un à l'autre ou enrobés l'un à l'autre.

La paroi supérieure 3 peut être imprégnée d'un engrais transférable au substrat de culture 2 par l'eau d'arrosage ou de ruissellement.

La paroi supérieure 3 peut avantageusement comporter des repères d'implantation 12 (figure 4), selon un ou plusieurs maillages, pour la mise en place de jeunes plants 10 dans le substrat 2 approprié à leur croissance.

Un ou plusieurs orifices de remplissage 13 peuvent être prévus sur la ligne de solidarisation de la paroi supérieure 3 et de la paroi inférieure 4 ou paroi verticale 5a. Ils sont refermés après remplissage du sac 1 par le substrat de culture 2.

Il est également possible, et avantageux pour des sacs 1 de dimensions relativement importantes, de solidariser l'une à l'autre les parois supérieure 3 et inférieure 4 par des lignes de solidarisation intermédiaires 14. On peut par exemple prévoir des lignes de solidarisation 14 sous forme de liens, ou sous forme de parois intermédiaires, solidarisées aux parois supérieure 3 et inférieure 4 par rivets, couture, soudure, ou tout autre moyen.

On considère maintenant l'utilisation du dispositif de l'invention, tel qu'illustré sur les figures.

Grâce à la capacité de déformation de la structure périphérique 6, on peut donner au dispositif un premier état illustré sur la figure 1, sur la figure 3, ou sur la figure 4, dans lequel la structure périphérique 6 est roulée pour constituer des boudins périphériques qui assurent une stabilisation et un calage périphérique du sac 1, par exemple lors de son transport. Des liens 6e détachables peuvent maintenir sélectivement la structure périphérique 6 en position roulée par serrage autour des rouleaux.

Ensuite, la structure périphérique 6 peut être déployée verticalement comme illustré sur la figure 2, pour que son bord inférieur 6a plonge dans une réserve d'eau d'un bac approprié.

Egalement, la structure périphérique 6 peut être disposée dans le fond d'un bac de suspension aérienne 7 tel qu'illustré sur la figure 5, en contact avec des mèches de rétention 8a-8e qui elles-mêmes sont en communication avec une réserve d'eau 7j.

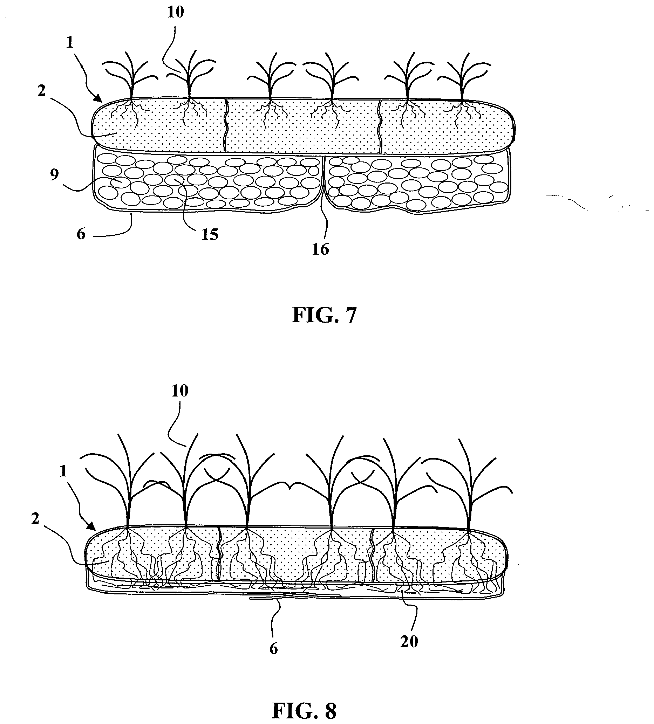

Dans le mode d'utilisation illustré sur la figure 7, la structure périphérique 6 est rabattue sous une recharge 15 de matériau de drainage et d'amendement, la recharge 15 étant destinée à former ensuite le lit 9 de matériau de drainage et d'amendement. La structure périphérique 6 est ramenée bord à bord dans la zone centrale 16 soit pour être posée sur une surface d'appui telle que le sol ou un plateau de support ou le fond d'un bac de suspension aérienne, soit fixée dans cette zone centrale 16, pour retenir la recharge 15 sous le sac 1 lors du portage. Simultanément, la structure périphérique 6 peut constituer un moyen de protection de la face inférieure de l'ensemble, par exemple pour protéger les racines des plants 10 contre tout frottement.

Sur la figure 6, le sac 1 et la structure périphérique 6 de la figure 7 sont en position déployée. On distingue ainsi que la structure périphérique 6 est repliée sur elle-même pour former une double paroi dans laquelle on peut verser, comme indiqué par la flèche 18, une recharge de matériau de drainage et d'amendement. On voit un rabat 6d de la structure périphérique 6. Ce rabat, une fois la double paroi remplie, sert à clore celle-ci par retournement vers l'intérieur.

Une ligne de désolidarisation 17 peut être matérialisée sur le pourtour 5, afin de permettre la séparation du lit supérieur, constitué par le sac 1 et le substrat 2, par rapport au lit de drainage 9, en vue d'une réutilisation possible de ce dernier, ou pour faciliter le recyclage des éléments.

Dans le mode de réalisation de la figure 7, le lit de matériau de drainage et d'amendement 9 fait partie intégrante de l'ensemble comprenant le sac 1, pour être retiré d'un bac de suspension aérienne 7 en même temps que le sac 1 à changer.

Dans la structure illustrée sur la figure 5, lorsque l'on désire changer la végétation, on retire le sac 1 et le substrat 2 avec les plantes qu'il contient, en tirant simultanément sur la structure périphérique 6 qui glisse aisément hors du compartiment 7i. On peut alors replacer un autre sac 1, en faisant pénétrer à la main progressivement, la structure périphérique 6 jusque dans le fond du bac de suspension aérienne 7. De la sorte, la végétation est changée en manipulant seulement le sac 1. Et cette manipulation est aisée, par le fait que la structure périphérique 6 constitue aussi un moyen de préhension très commode pour porter le sac 1.

On peut ainsi laisser en place le lit de matériau de drainage et d'amendement 9, ce qui facilite la manutention.

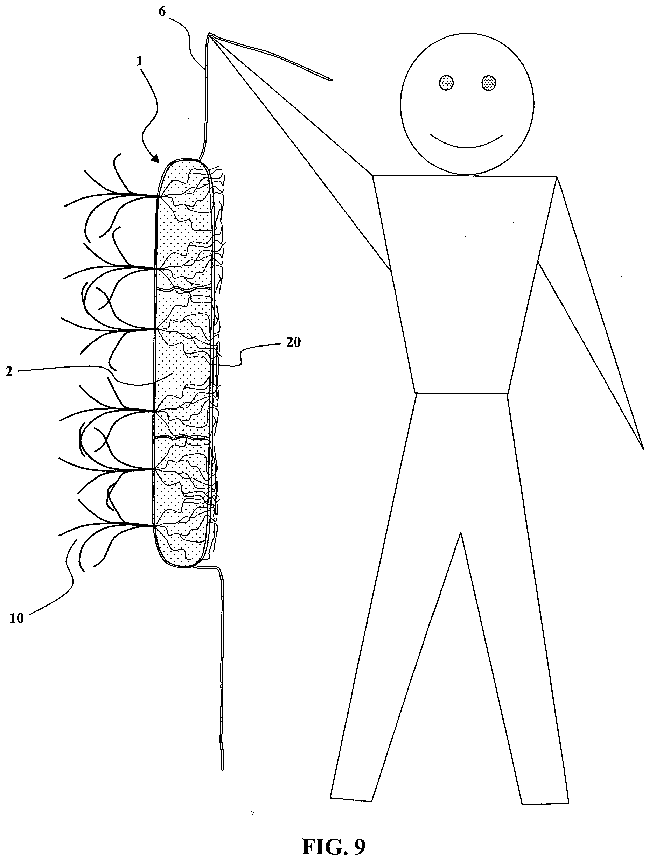

Le sac 1 contenant le substrat 2 peut être précultivé à la demande, posé sur une bâche. Les jeunes plants ayant démarré leur croissance dans le substrat 2, leurs racines percent très rapidement la paroi inférieure 4 et se développent latéralement sur la bâche en constituant un plateau racinaire 20. Le sac 1 est ensuite délivré quand les plants ont atteint un développement suffisant, comme illustré sur les figures 8 et 9.

Lors du transport, il est alors avantageux de protéger les parties de racines formant le plateau racinaire 20 contre un risque de frottement excessif contre un plateau de transport. On rabat alors pour cela la structure périphérique 6 sous le plateau racinaire 20, comme illustré sur la figure 8.

Lors de la manutention, par exemple pour déplacer à la main le dispositif depuis un plateau de transport jusque dans un bac de suspension aérienne, le plateau racinaire 20, qui ancre efficacement les plantes 10 dans le dispositif et évite toute déformation du sac 1 ou déplacement de son substrat de culture 2, rend possible la tenue du dispositif suspendu en orientation verticale par l'un de ses côtés de structure périphérique 6, comme illustré sur la figure 9.

Après positionnement du dispositif dans un bac de suspension aérienne, les racines du plateau racinaire 20 poursuivent leur développement et peuvent plonger dans un milieu drainant 9 (figure 5) étudié pour assurer une croissance optimale.

La structure de sac 1, de dimensions adéquates et facilement manipulable, permet de remplir correctement des bacs de suspension aérienne 7 de formes les plus diverses avec une recharge précultivée et/ou fleurie.

La présente invention n'est pas limitée aux modes de réalisation qui ont été explicitement décrits, mais elle en inclut les diverses variantes et généralisations contenues dans le domaine des revendications ci-après.

## Revendications

1. Dispositif pour la culture hors sol de plantes dans un bac de suspension aérienne (7), comprenant un sac (1) contenant un substrat de culture (2), le sac (1) comportant une paroi supérieure (3) et une paroi inférieure (4) solidarisées l'une à l'autre selon un pourtour de sac (5) et adaptées pour retenir le substrat de culture (2) lors des manipulations et du transport, dans lequel :
- la paroi inférieure (4) se prolonge au-delà du pourtour de sac (5) selon une structure périphérique (6) de taille suffisante pour plonger dans le fond du bac de suspension aérienne (7),
- la paroi inférieure (4) est en un matériau hydrophile, apte à remplir le rôle de nappe d'hydratation,
**caractérisé en ce que** :
- la paroi inférieure (4) est structurée de façon à être perméable aux racines des plantes que l'on veut cultiver dans le dispositif,
- la structure périphérique (6) est en forme de bavette échancrée, définissant une pluralité de prolongements périphériques (6b, 6c) répartis depuis le pourtour de sac (5).

2. Dispositif selon la revendication 1, **caractérisé en ce que** la structure périphérique (6) est associée à des moyens de lestage de sa zone d'extrémité libre (6a), favorisant son maintien en extension verticale.

3. Dispositif selon l'une des revendications 1 ou 2, **caractérisé en ce que** la structure périphérique (6) est en un matériau présentant une résistance mécanique suffisante pour constituer un organe de préhension pour le portage du sac (1) et de son contenu.

4. Dispositif selon la revendication 3, **caractérisé en ce que** la structure périphérique (6) comprend des zones renforcées de préhension (11), facilitant la préhension et participant au lestage.

5. Dispositif selon l'une quelconque des revendications 1 à 4, **caractérisé en ce que** la structure périphérique (6) est adaptée pour être sélectivement déployée vers le bas afin de plonger dans un compartiment de rétention d'eau du bac de suspension aérienne (7), pour être sélectivement roulée en périphérie du sac (1) afin de constituer un moyen de stabilisation et de calage périphérique, et pour être sélectivement rabattue sous la face inférieure du sac (1) afin de constituer un moyen de protection inférieure lors du transport.

6. Dispositif selon l'une quelconque des revendications 1 à 5, **caractérisé en ce que** les parois supérieure (3) et inférieure (4) sont directement solidarisées l'une à l'autre selon le pourtour de sac (5) par couture, collage, agrafage ou soudure.

7. Dispositif selon l'une quelconque des revendications 1 à 5, **caractérisé en ce que** les parois supérieure (3) et inférieure (4) sont solidarisées l'une à l'autre par l'intermédiaire d'une paroi périphérique de liaison (5a), de hauteur adaptée à la dimension du bac de suspension aérienne (7), et à laquelle elles sont fixées par couture, collage, agrafage ou soudure.

8. Dispositif selon l'une quelconque des revendications 1 à 7, **caractérisé en ce que** la paroi supérieure (3) est formée d'au moins deux matériaux associés comprenant un premier matériau conformé en grosses mailles, susceptible d'assurer une bonne tenue d'une couche de paillage ultérieurement déposée sur le sac (1), et un second matériau rapidement biodégradable sous l'action de l'eau et obturant temporairement les trous desdites mailles du premier matériau pour retenir temporairement le substrat de culture (2) lors des manipulations et du transport du sac (1).

9. Dispositif selon l'une quelconque des revendications 1 à 8, **caractérisé en ce qu'**il contient des plantes dont les racines traversent la paroi inférieure (4) perméable aux racines et forment, sous la paroi inférieure (4), un plateau racinaire (20) qui ancre les racines et les plantes au dispositif.

10. Dispositif selon l'une quelconque des revendications 1 à 9, **caractérisé en ce qu'**il comprend un bac de suspension aérienne (7) à double paroi (7a, 7b), dont le double fond constitue une réserve d'eau (7j) communiquant par des mèches de rétention (8a-8e) avec la base du compartiment intérieur (7i) du bac.

11. Dispositif selon la revendication 10, **caractérisé en ce qu'**il comprend un lit de matériau de drainage et d'amendement (9), sur lequel repose le sac (1) à substrat de culture (2), la structure périphérique (6) étant engagée autour et sous le lit de matériau de drainage et d'amendement (9) pour venir en contact des mèches de rétention (8a-8e).

12. Dispositif selon la revendication 11, **caractérisé en ce que** le lit de matériau de drainage et d'amendement (9) est formé de la juxtaposition d'une pluralité de sachets individuels dudit matériau, l'enveloppe des sachets étant en un matériau perméable à l'air et laissant le passage des racines.

## Patentansprüche

1. Vorrichtung zur erdlosen Aufzucht von Pflanzen in einem Behälter (7) mit oberirdischer Aufhängung, umfassend einen Sack (1), der ein Aufzuchtsubstrat (2) enthält und eine obere Wand (3) sowie eine untere Wand (4) aufweist, die am Sackumfang (5) miteinander verbunden und so ausgebildet sind, dass sie das Aufzuchtsubstrat (2) bei der Manipulation und beim Transport halten, wobei
- die untere Wand (4) mit einer umlaufenden Struktur (6) über den Sackumfang (5) hinaus um ein Maß verlängert ist, das ausreicht, um bis zum Boden des oberirdisch aufgehängten Behälters (7) einzutauchen,
- die untere Wand (4) aus einem saugfähigen Material besteht, das dazu geeignet ist, die Rolle einer saugfähigen Schicht auszuüben,
**dadurch gekennzeichnet, dass**:
- die untere Wand (4) so strukturiert ist, dass sie durchlässig für Wurzeln von Pflanzen ist, die in der Vorrichtung aufgezogen werden sollen,
- die umlaufende Struktur (6) die Form eines geschweiften Schurzes mit mehreren peripheren Verlängerungen (6b, 6c) hat, die über den Sackumfang (5) verteilt sind.

2. Vorrichtung nach Anspruch 1, **dadurch gekennzeichnet, dass** die umlaufende Struktur (6) im Bereich ihrer freien Enden (6a) mit Ballastmitteln versehen ist, die dazu dienen, eine vertikale Ausrichtung zu begünstigen.

3. Vorrichtung nach Anspruch 1 oder 2, **dadurch gekennzeichnet, dass** die umlaufende Struktur (6) aus einem Material mit einer mechanischen Festigkeit besteht, die ausreichend ist, um ein Organ zum Ergreifen auszubilden, um den der Sack (1) mit seinem Inhalt zu tragen.

4. Vorrichtung nach Anspruch 3, **dadurch gekennzeichnet, dass** die umlaufende Struktur (6) verstärkte Griffbereiche (11) hat, die ein Ergreifen erleichtern und den Ballast unterstützen.

5. Vorrichtung nach einem der Ansprüche 1 bis 4, **dadurch gekennzeichnet, dass** die umlaufende Struktur (6) so ausgebildet ist, dass sie wahlweise nach unten ausgefahren werden kann, um sie in ein Wasserbad des Behälters (7) einzutauchen und um wahlweise am Sackumfang (1) aufgerollt zu werden, wodurch ein Mittel zur Stabilisierung und Positionierung am Umfang gebildet wird, das wahlweise unter die Unterseite des Sackes (1) geklappt werden kann, wodurch beim Transport ein unteres Schutzelement gebildet wird.

6. Vorrichtung nach einem der Ansprüche 1 bis 5, **dadurch gekennzeichnet, dass** die obere Wand (3) und die untere Wand (4) am Sackumfang (5) durch Nähen, Kleben, Verklammern oder Schweißen unmittelbar miteinander verbunden sind.

7. Vorrichtung nach einem der Ansprüche 1 bis 5, **dadurch gekennzeichnet, dass** die obere Wand (3) und die untere Wand (4) durch eine umlaufende Überbrückungswand (5a) miteinander verbunden sind, deren Höhe an die Abmessungen des aufgehängten Behälters (7) angepasst ist und an der die Wände durch Nähen, Kleben, Klammern oder Schweißen befestigt sind.

8. Vorrichtung nach einem der Ansprüche 1 bis 7, **dadurch gekennzeichnet, dass** die obere Wand (3) aus wenigstens zwei miteinander verbundenen Werkstoffen besteht, nämlich einem ersten Werkstoff mit großen Maschen zur guten Halterung für eine Strohschicht, die zusätzlich auf dem Sack (1) aufliegt, und einem zweiten Werkstoff, der unter dem Einfluss von Wasser rasch biologisch abbaubar ist und vorübergehend die Öffnungen der Maschen des ersten Materials schließt, wodurch das Aufzuchtsubstrat (2) bei der Manipulierung und dem Transport des Sackes (1) gehalten wird.

9. Vorrichtung nach einem der Ansprüche 1 bis 8, **dadurch gekennzeichnet, dass** diese Pflanzen aufnimmt, deren Wurzeln die für Wurzeln durchlässige untere Wand (4) durchdringen und unter der unteren Wand (4) ein Wurzelbett (20) bilden, das die Wurzeln und die Pflanzen mit der Vorrichtung verankern.

10. Vorrichtung nach einem der Ansprüche 1 bis 9, **dadurch gekennzeichnet, dass** diese einen Behälter (7) für die oberirdische Aufhängung mit einer Doppelwand (7a, 7b) aufweist, wobei der doppelte Boden eine Wasserreserve (7j) bildet, die über Haltedochte (8a - 8e) mit der Basis des Innenraumes (7i) des Behälters (7) verbunden sind.

11. Vorrichtung nach Anspruch 10, **dadurch gekennzeichnet, dass** diese ein Materialbett zur Drainage und Düngung (9) aufweist, auf dem der Sack (1) mit dem Aufzuchtsubstrat (2) aufliegt, wobei die umlaufende Struktur (6) um das Bett und unter dem Bett mit dem Drainage- und Düngematerial (9) zusammenwirkt, um in Kontakt mit den Haltedochten (8a - 8e) zu kommen.

12. Vorrichtung nach Anspruch 11, **dadurch gekennzeichnet, dass** das Bett aus Drainage- und Düngematerial (9) durch Übereinanderlagerung von mehreren Einzelsäcken des Materials gebildet ist, deren Umhüllung aus einem luftdurchlässigen Material besteht, welches auch für Wurzeln durchlässig ist.

## Claims

1. Device for the out-of-ground cultivation of plants in an aerially suspended container (7), comprising a bag (1) containing a growing medium (2), the bag (1) including an upper wall (3) and a lower wall (4) that are secured to one another by a bag rim (5) and are suitable for retaining the growing medium (2) during handling and transport, wherein:
- the lower wall (4) extends beyond the bag rim (5) following a peripheral structure (6) of sufficient size to plunge to the bottom of the aerially suspended container (7),
- the lower wall (4) is made of a hydrophilic material, capable of acting as a hydration mat,
**characterized in that**:
- the lower wall (4) is structured so that it is permeable to the roots of the plants that are desired to be cultivated in the device,
- the peripheral structure (6) takes the form of an indented bib, defining a plurality of peripheral extensions (6b, 6c) that are distributed from the bag rim (5).

2. Device according to claim 1, **characterized in that** the peripheral structure (6) is associated with ballasting means from its free end area (6a), favouring it being held as a vertical extension.

3. Device according to either of claims 1 and 2, **characterized in that** the peripheral structure (6) is made of a material having a mechanical resistance that is sufficient to constitute a gripping member for carrying the bag (1) and its contents.

4. Device according to claim 3, **characterized in that** the peripheral structure (6) comprises reinforced gripping areas (11), facilitating gripping and contributing to ballasting.

5. Device according to any one of claims 1 to 4, **characterized in that** the peripheral structure (6) is suitable for being selectively deployed downwards so as to plunge into a water-holding compartment of the aerially suspended container (7), for being selectively rolled up at the periphery of the bag (1) so as to constitute a means for peripheral stabilization and shimming, and for being selectively folded up under the lower face of the bag (1) so as to constitute a lower protection means during transport.

6. Device according to any one of claims 1 to 5, **characterized in that** the upper (3) and lower (4) walls are directly secured to one another around the bag rim (5) by sewing, bonding, stapling or welding.

7. Device according to any one of claims 1 to 5, **characterized in that** the upper (3) and lower (4) walls are secured to one another via a peripheral connecting wall (5a), the height of which is suitable for the size of the aerially suspended container (7), and to which peripheral connecting wall said upper and lower walls are attached by sewing, bonding, stapling or welding.

8. Device according to any one of claims 1 to 7, **characterized in that** the upper wall (3) is formed from at least two associated materials comprising a first material that is arranged as a coarse mesh, which material is liable to provide a good hold on a layer of mulch that is subsequently deposited on the bag (1), and a second material that is rapidly biodegradable under the action of water and that temporarily blocks the holes of said mesh of the first material so as to temporarily retain the growing medium (2) when handling and transporting the bag (1).

9. Device according to any one of claims 1 to 8, **characterized in that** it contains plants, the roots of which pass through the root-permeable lower wall (4) and form, below the lower wall (4), a root plate (20) that anchors the roots and the plants to the device.

10. Device according to any one of claims 1 to 9, **characterized in that** it comprises a double-walled (7a, 7b) aerially suspended container (7), the double bottom of which constitutes a water reservoir (7j) communicating, via retaining wicks (8a-8e), with the base of the inner compartment (7i) of the container.

11. Device according to claim 10, **characterized in that** it comprises a bed of drainage and enrichment material (9), on which the bag (1) of growing medium (2) rests, the peripheral structure (6) being engaged around and under the bed of drainage and enrichment material (9) so as to come into contact with the retaining wicks (8a-8e).

12. Device according to claim 11, **characterized in that** the bed of drainage and enrichment material (9) is formed from the juxtaposition of a plurality of individual sachets of said material, the envelope of the sachets being made of an air-permeable material and allowing the roots to pass through.
